(19) Europäisches Patentamt
European Patent Office
Office européen des brevets

(11) EP 2 287 253 B1

(12) **EUROPEAN PATENT SPECIFICATION**

(45) Date of publication and mention of the grant of the patent:
**06.01.2016 Bulletin 2016/01**

(21) Application number: **09754849.9**

(22) Date of filing: **26.05.2009**

(51) Int Cl.:
***C08L 67/04*** *(2006.01)* ***C08K 5/5357*** *(2006.01)*
***C08L 101/16*** *(2006.01)*

(86) International application number:
**PCT/JP2009/059940**

(87) International publication number:
**WO 2009/145341 (03.12.2009 Gazette 2009/49)**

# (54) FLAME-RETARDANT RESIN COMPOSITION AND MOLDING DERIVED THEREFROM

FEUERFESTE HARZZUSAMMENSETZUNG UND FORMARTIKEL DARAUS

COMPOSITION DE RÉSINE IGNIFUGE ET MOULAGE DÉRIVÉ DE CELLE-CI

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **27.05.2008 JP 2008138114**

(43) Date of publication of application:
**23.02.2011 Bulletin 2011/08**

(73) Proprietor: **Teijin Chemicals, Ltd.**
**Chiyoda-ku**
**Tokyo 100-0013 (JP)**

(72) Inventors:
- **YAMANAKA, Katsuhiro**
  **Tokyo 100-0013 (JP)**
- **KONDO, Fumitaka**
  **Tokyo 100-0013 (JP)**
- **TOYOHARA, Kiyotsuna**
  **Iwakuni-shi**
  **Yamaguchi 740-0014 (JP)**

(74) Representative: **Adam, Holger et al**
**Kraus & Weisert**
**Patentanwälte PartGmbB**
**Thomas-Wimmer-Ring 15**
**80539 München (DE)**

(56) References cited:

| | |
|---|---|
| **EP-A1- 1 586 576** | **WO-A1-2007/040243** |
| **DE-A1- 2 630 693** | **JP-A- 52 012 329** |
| **JP-A- 2003 213 109** | **JP-A- 2004 018 585** |
| **JP-A- 2004 018 586** | **JP-A- 2004 131 580** |
| **JP-A- 2005 162 872** | **JP-A- 2005 255 940** |
| **US-A- 4 178 281** | **US-A- 4 257 931** |

- **DATABASE WPI Week 200441 Thomson Scientific, London, GB; AN 2004-433805 XP002707721, & JP 2004 131580 A (TEIJIN KASEI LTD) 30 April 2004 (2004-04-30)**
- **DATABASE WPI Week 200429 Thomson Scientific, London, GB; AN 2004-308206 XP002707722, & JP 2004 018585 A (TEIJIN KASEI LTD) 22 January 2004 (2004-01-22)**

Remarks:
The file contains technical information submitted after the application was filed and not included in this specification

EP 2 287 253 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field of the Invention

The present invention relates to a flame retardant resin composition which comprises a resin obtained from a plant-derived raw material and has high flame retardancy and excellent physical properties and to a molded article thereof. More specifically, it relates to a substantially halogen-free flame retardant resin composition which comprises a specific organic phosphorus compound and to a molded article thereof.

### Description of the Prior Art

Resins such as polypropylene (PP), acrylonitrile-butadiene-styrene (ABS), polyamides (PA6, PA66), polyesters (PET, PBT) and polycarbonate (PC) are used as raw materials for obtaining resin molded articles. These resins are produced from raw materials obtained from oil resources.

In recent years, problems such as the depletion of oil resources and global environment have been concerned, and the production of a resin from a raw material obtained from biogenic matter such as a plant has been desired. Especially when a global environmental problem is taken into consideration, a resin obtained from a plant-derived raw material is regarded as a resin having a low load on the global environment from the concept "carbon neutral" which means that the balance of carbon is neutral in view of the amount of carbon dioxide absorbed during the growth of a plant even when it is burnt after use.

Meanwhile, when a resin obtained from a plant-derived raw material is used as an industrial material, especially an electric/electronic-related part, OA-related part or auto part, flame retardancy must be provided to the resin from the viewpoint of safety.

Various attempts have been made for the flame retardation of resins obtained from plant-derived raw materials, especially polylactic acid resin, and a certain measure of flame retardation has been achieved. However, a large amount of a flame retardant is used for flame retardation in most cases, whereby the physical properties of the resins are impaired (patent documents 1 to 6).

(Patent Document 1) JP-A 2001-164014
(Patent Document 2) JP-A 2004-277552
(Patent Document 3) JP-A 2005-023260
(Patent Document 4) JP-A 2005-139441
(Patent Document 5) JP-A 2007-246730
(Patent Document 5) JP-A 2008-019294

JP-A 2004-131580 describes a polyester resin composition containing substantially no halogen and having high flame retardancy. The resin composition consists of a resin component containing at least 60 wt.% of an aromatic polyester resin, an organophosphorus compound, a nitrogenous compound, a resin for improving flame retardancy, and a filler.

EP 1 586 576 A1 describes a process for producing a pentaerythritol diphosphonate which is capable of being utilized as a fire retarding agent and the like and which can be provided with high purity and high yield by an industrially advantageous process excellent in productivity.

JP-A 2004 018585 describes a flame-retardant polyester resin composition comprising a resin component containing at least 60 wt.% aromatic polyester resin, a specified organophosphorus compound, a flame-retardancy improving resin, and a filler.

WO 2007/040243 describes a biodegradable resin composition which has a high transparency and produces less aggregates. The biodegradable resin composition comprises a biodegradable polyester resin, a layered silicate, and at least one component selected from a polyether phosphate ester compound, a polar wax and jojoba oil.

### Summary of the Invention

It is a first object of the present invention to provide a flame retardant resin composition which comprises a resin obtained from a plant-derived raw material and has high flame retardancy and excellent physical properties and a molded article thereof.

It is a second object of the present invention to provide a substantially halogen-free flame retardant resin composition which comprises a specific organic phosphorus compound and a molded article thereof.

According to studies conducted by the inventors of the present invention, the above objects of the present invention are attained by a flame retardant resin composition comprising:

(A) 100 parts by weight of a resin component (component A) which contains at least 50 wt% of a polylactic acid resin (component A-1) obtained from a plant-derived raw material; and

(B) 3 to 50 parts by weight of an organic phosphorus compound (component B) represented by the following formula (1-a), and

a molded article thereof.

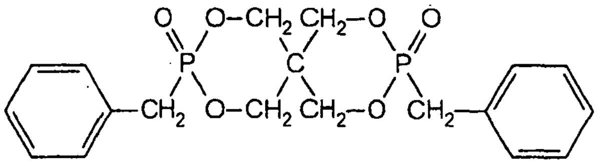

(1-a)

According to the present invention, a flame retardant resin composition which comprises a plant-derived raw material and has high flame retardancy is obtained without impairing the characteristic properties of a resin.

Detailed Description of the Preferred Embodiments

The flame retardant resin composition of the present invention will be described in more detail hereinunder.

(component A-1: resin obtained from a plant-derived raw material)

In the present invention, the resin component (component A) should comprise a resin obtained from a plant-derived raw material as the main component. The content of the resin (component A-1) obtained from a plant-derived raw material in the resin component (component A) is at least 50 wt%, preferably at least 60 wt%, more preferably at least 70 wt%. The content of another resin (component A-2) in the resin component (component A) is not more than 50 wt%, preferably not more than 40 wt%, more preferably not more than 30 wt%.

The resin (component A-1) obtained from a plant-derived raw material has a biogenic matter content measured in accordance with ASTM D6866 05 of preferably not less than 25 %, more preferably not less than 50 %, much more preferably not less than 70 %. For the quality of the present invention, the biogenic matter content is preferably higher. When the content is lower than 25 %, it is hard to say that the resin is a biomass material.

The resin (component A-1) obtained from a plant-derived raw material is a resin which comprises a plant-derived raw material as the main component, and its combined species is not particularly limited. It is a polylactic acid resin.

Examples of a lactic acid-based resin include a polylactic acid which is a polymer of a lactic acid and a lactic acid copolymer which comprises a lactic acid as the main component. Examples of the lactic acid copolymer include a lactic acid-hydroxycarboxylic acid copolymer and a lactic acid-aliphatic polyhydric alcohol-aliphatic polybasic acid copolymer.

L-lactic acid, D-lactic acid, a mixture thereof or a lactide which is a cyclic dimer of lactic acid may be used as the lactic acid. The lactic acid-based resin in the present invention may be a homopolymer of one of the above raw material lactic acids or a copolymer of two or more of them.

Examples of the lactic acid include L-lactic acid, D-lactic acid, DL-lactic acid, mixtures thereof and lactide which is a cyclic dimer of lactic acid. Poly(L-lactic acid), poly(D-lactic acid), polylactide, or a mixture or copolymer thereof may be used as the lactic acid-based resin.

Examples of the aliphatic polyhydric alcohol include aliphatic diols such as ethylene glycol, diethylene glycol, triethylene glycol, polyethylene glycol, propylene glycol, dipropylene glycol, 1,3-butanediol, 1,4-butanediol, 3-methyl-1,5-pentanediol, 1,6-hexanediol, 1,9-nonanediol, neopentyl glycol, decamethylene glycol and 1,4-cyclohexane dimethanol. They may be used alone or in combination of two or more.

Examples of the aliphatic polybasic acid include aliphatic dibasic acids such as succinic acid, oxalic acid, malonic acid, glutaric acid, adipic acid, pimelic acid, suberic acid, azelaic acid, sebacic acid, undecanedioic acid and dodecanedioic acid. They may be used alone or in combination of two or more.

Examples of the aliphatic hydroxycarboxylic acid include glycolic acid, 3-hydroxybutyric acid, 4-hydroxybutyric acid, 3-hydroxyvaleric acid, 4-hydroxyvaleric acid and 6-hydrocaproic acid. They may be used alone or in combination of two or more.

The lactic acid-based resin used in the present invention may be a mixture of two or more different lactic acid-based resins. When two lactic acid-based resins which are poly(L-lactic acid) resin comprising L-lactic acid as the main component and poly(D-lactic acid) comprising D-lactic acid as the main component are mixed together, stereocomplex polylactic acid having high crystallinity is formed, thereby making it possible to obtain a molded article having excellent heat resistance due to the high melting point of the stereocomplex polylactic acid advantageously. The mixing weight ratio of poly(L-lactic acid) resin to poly(D-lactic acid) resin is preferably 10/90 to 90/10. To form more stereocomplex, the mixing weight ratio is preferably 25/75 to 75/25, more preferably 40/60 to 60/40. When the weight ratio of one polymer

is less than 10 or more than 90, homocrystallization proceeds first and stereocomplex is hardly formed disadvantageously.

The method of producing the lactic acid-based resin used in the present invention is not particularly limited but a generally known melt polymerization method and/or a solid-phase polymerization method may be used to produce the lactic acid-based resin. As an example of the method, US Patent No. 5, 310, 865 discloses a method in which lactic acid or a mixture of lactic acid and a hydroxycarboxylic acid is used as a raw material to carry out dehydration polycondensation directly. US Patent No. 2,758,987 discloses a ring-opening polymerization method in which a cyclic dimer of lactic acid (lactide) is melt polymerized. US Patent No. 4,057,537 discloses a ring-opening polymerization method in which cyclic dimers of lactic acid and an aliphatic hydroxycarboxylic acid, for example, lactide and glycolide, and ε-caprolactone are melt polymerized in the presence of a catalyst. US Patent No. 5,428,126 discloses a method in which the dehydration condensation of a mixture of lactic acid, an aliphatic dihydric alcohol and an aliphatic dibasic acid is directly carried out. European Patent No. 0712880A2 discloses a method in which a polymer of polylactic acid, an aliphatic dihydric alcohol and an aliphatic dibasic acid is condensed in the presence of an organic solvent.

Further, as a general method of producing a polyester polymer, a target object is also obtained by carrying out the dehydration polycondensation reaction of a lactic acid in the presence of a catalyst and further carrying out solid-phase polymerization in part of the step.

(component A-2: another resin)

The constituent resin (component A) of the present invention may contain another resin (component A-2) in addition to the resin (component A-1) obtained from a plant-derived raw material. As described above, the content of the another resin (component A-2) in the component A is not more than 50 wt%, preferably not more than 40 wt%, more preferably not more than 30 wt%.

The another resin (component A-2) is at least one selected from the group consisting of polyester resin (PEst) polyphenylene ether resin (PPE), polycarbonate resin (PC), polyamide resin (PA), polyolefin resin (PO), styrene-based resin, polyphenylene sulfide resin (PPS) and polyether imide resin (PEI). Out of these components A-2, polyester resin (PEst), polyphenylene ether sin (PPE), polycarbonate resin (PC), polyamide resin (PA), polyolefin resin (PO) and styrene-based resin are preferred.

A detailed description is subsequently given of this thermoplastic resin as the component A-2.

The polyester resin (PEst) is one or a mixture of two or more selected from aromatic polyester resins and aliphatic polyester resins. It is preferably an aromatic polyester resin which is a polyester comprising an aromatic dicarboxylic acid as the main dicarboxylic acid component and an aliphatic diol having 2 to 10 carbon atoms as the main glycol component. The dicarboxylic acid component contains an aromatic dicarboxylic acid component in an amount of preferably not less than 80 mol%, more preferably not less than 90 mol%. Meanwhile, the glycol component contains an aliphatic diol component having 2 to 10 carbon atoms in an amount of preferably not less than 80 mol%, more preferably not less than 90 mol%.

Preferred examples of the aromatic dicarboxylic acid component include terephthalic acid, isophthalic acid, phthalic acid, methyl terephthalic acid, methyl isophthalic acid and 2, 6-naphthalenedicarboxylic acid. They may be used alone or in combination of two or more. Other dicarboxylic acids except for the above aromatic dicarboxylic acids include aliphatic dicarboxylic acids and alicyclic dicarboxylic acids such as adipic acid, sebacic acid, decanedicarboxylic acid, azelaic acid, dodecanedicarboxylic acid and cyclohexanedicarboxylic acid.

Examples of the aliphatic diol having 2 to 10 carbon atoms include aliphatic diols such as ethylene glycol, trimethylene glycol, tetramethylene glycol, hexamethylene glycol and neopentyl glycol, and alicyclic diols such as 1,4-cyclohexane dimethanol. Other glycols except for the aliphatic diols having 2 to 10 carbon atoms include p,p'-dihydroxyethoxy bisphenol A and polyoxyethylene glycol.

A preferred example of the aromatic polyester resin is a polyester having an ester unit comprising at least one dicarboxylic acid selected from terephthalic acid and 2,6-naphthalenedicarboxylic acid as the main dicarboxylic acid component and at least one diol selected from ethylene glycol, trimethylene glycol and tetramethylene glycol as the main diol component.

Specifically, the aromatic polyester resin is preferably at least one selected from the group consisting of polyethylene terephthalate resin, polybutylene terephthalate resin, polyethylene naphthalate resin, polybutylene naphthalate resin, polycyclohexanedimethyl terephthalate resin, polytrimethylene terephthalate resin and polytrimethylene naphthalate resin.

It is more preferably at least one selected from the group consisting of polyethylene terephthalate resin, polybutylene terephthalate resin and polyethylene naphthalate resin. It is particularly preferably a polybutylene terephthalate resin.

A polyester elastomer having the above recurring unit as the main recurring unit of a hard segment may be used as the aromatic polyester resin in the present invention.

An amorphous polyester or polycaprolactone comprising at least one dicarboxylic acid selected from terephthalic

acid, isophthalic acid, sebacic acid and adipic acid and at least one diol selected from the group consisting of a long-chain diol having 5 to 10 carbon atoms and $H(OCH_2CH_2)_iOH$ (i = 2 to 5) as the diol component and having a melting point of 100°C or lower may be used as the soft segment of the polyester elastomer containing tetramethylene terephthalate or tetramethylene-2,6-napthalene dicarboxylate as the main recurring unit of the hard segment.

The expression "main component" means a component which accounts for not less than 80 mol%, preferably not less than 90 mol% of the total of all the dicarboxylic acid components or all the glycol components, and the expression "main recurring unit" means a recurring unit which accounts for not less than 80 mol%, preferably not less than 90 mol% of the total of all the recurring units.

As for the molecular weight of the aromatic polyester resin which may be used in the present invention, the aromatic polyester resin may have an intrinsic viscosity that enables a molded product thereof to be used generally, preferably 0. 5 to 1. 6 dl/g, more preferably 0. 6 to 1. 5 dl/g when measured in orthochlorophenol at 35°C.

It is advantageous that the aromatic polyester resin should have a terminal carboxyl group (-COOH) content of 1 to 60 equivalents/T (1 ton of a polymer). This terminal carboxyl group content can be obtained by measuring an m-cresol solution in accordance with a potential difference titration method using an alkali solution.

A resin which is generally known as PPE resin may be used as the polyphenylene ether resin which is the component A-2. Examples of PPE include homopolymers and/or copolymers such as (2,6-dimethyl-1,4-phenylene)ether, (2,6-diethyl-1,4-phenylene)ether, (2,6-dipropyl-1,4-phenylene)ether, (2-methyl-6-ethyl-1,4-phenylene)ether, (2-methyl-6-propyl-1,4-phenylene)ether and (2,3,6-trimethyl-1,4-phenylene)ether Poly(2,6-dimethyl-1,4-phenylene)ether is particularly preferred. A graft copolymer obtained by graft polymerizing PPE with a styrene compound may also be used. The method of producing PPE is not particularly limited but PPE can be easily produced by oxidation polymerizing 2, 6-xylenol in the presence of a complex of a cuprous salt and an amine as a catalyst in accordance with the method described in US Patent No. 3,306,874.

The reduced viscosity $\eta_{\varepsilon p}/C$ (0.5 g/dl, toluene solution, measured at 30°C) which is a measure of the molecular weight of PPE resin is 0.2 to 0.7 dl/g, preferably 0.3 to 0.6 dl/g. PPE resin having a reduced viscosity within this range has good balance between moldability and mechanical properties, and the reduced viscosity can be easily controlled by adjusting the amount of the catalyst at the time of producing PPE.

The polycarbonate-based resin (PC) as the component A-2 is obtained from an interfacial polymerization reaction between a dihydroxyaryl compound and phosgene in the presence of a solvent such as methylene chloride or from an ester interchange reaction between a dihydroxyaryl compound and diphenyl carbonate. Typical PC is a polycarbonate obtained from a reaction between 2,2'-bis(4-hydroxyphenyl)propane and phosgene.

Examples of the dihydroxyaryl compound as a raw material of the polycarbonate include

bis(4-hydroxyphenyl)methane,
1,1'-bis(4-hydroxyphenyl)ethane,
2,2'-bis(4-hydroxyphenyl)propane,
2,2'-bis(4-hydroxyphenyl)butane,
2,2'-bis(4-hydroxyphenyl)octane,
2,2'-bis(4-hydroxy-3-methylphenyl)propane,
2,2'-bis(4-hydroxy-3-tert-butylphenyl)propane,
2,2'-bis(3,5-dimethyl-4-hydroxyphenyl)propane,
2,2'-bis(4-hydroxy-3-cyclohexylphenyl)propane,
2,2'-bis(4-hydroxy-3-methoxyphenyl)propane,
1,1'-bis(4-hydroxyphenyl)cyclopentane,
1,1'-bis(4-hydroxyphenyl)cyclohexane,
1,1'-bis(4-hydroxyphenyl)cyclododecane,
4,4'-dihydroxyphenyl ether,
4,4'-dihydroxy-3,3'-dimethylphenyl ether,
4,4'-dihydroxydiphenyl sulfide,
4,4'-dihydroxy-3,3'-dimethyldiphenyl sulfide,
4,4'-dihydroxydiphenyl sulfoxide, 4,4'-dihydroxydiphenyl sulfone and bis(4-hdyroxyphenyl)ketone. These dihydroxyaryl compounds may be used alone or in combination of two or more.

Preferred dihydroxyaryl compounds are bisphenols which form an aromatic polycarbonate having high heat resistance, bis(hydroxyphenyl)alkanes such as 2,2'-bis(4-hydroxyphenyl)propane, bis(hydroxypheny)cycloalkanes such as bis(4-hydroxyphenyl)cyclohexane, dihydroxydiphenyl sulfide, dihydroxydiphenyl sulfone and dihydroxydiphenyl ketone. A particularly preferred dihydroxyaryl compound is 2,2'-bis(4-hydroxyphenyl)propane which forms a bisphenol A type aromatic polycarbonate.

Part of bisphenol A may be substituted by another dihydroxyaryl compound to produce a bisphenol A type

aromatic polycarbonate as long as heat resistance and mechanical properties are not impaired.

The molecular weight of the polycarbonate resin does not need to be particularly limited but if it is too low, strength becomes unsatisfactory and if it is too high, melt viscosity becomes high, thereby making it difficult to mold the resin. The molecular weight is generally 10,000 to 50,000, preferably 15,000 to 30,000 in terms of viscosity average molecular weight. The viscosity average molecular weight (M) is obtained by inserting a specific viscosity ($\eta sp$) obtained from a solution prepared by dissolving 0.7 g of the polycarbonate resin in 100ml of methylene chloride at 20°C into the following expression.

$$\eta_{sp}/C = [\eta] + 0.45 \times [\eta]^2 C$$

$$[\eta] = 1.23 \times 10^{-4} M^{0.83}$$

($[\eta]$ is an intrinsic viscosity and C is 0.7 as the concentration of the polymer.)

A brief description is given of the basic means for producing the polycarbonate resin. In the interfacial polymerization method (solution polymerization method) in which phosgene is used as a carbonate precursor, a reaction is generally carried out in the presence of an acid binder and an organic solvent. Examples of the acid binder include alkali metal hydroxides such as sodium hydroxide and potassium hydroxide and amine compounds such as pyridine. Examples of the organic solvent include halogenated hydrocarbons such as methylene chloride and chlorobenzene. A catalyst such as tertiary amine or quaternary amine may be used to promote the reaction, and a terminal capping agent such as phenol or alkyl-substituted phenol as exemplified by p-tert-butylphenol is desirably used as a molecular weight control agent. The reaction temperature is generally 0 to 40°C, the reaction time is several minutes to 5 hours, and pH during the reaction is preferably kept at 10 or more. All the terminals of the obtained molecular chain do not need to have a structure derived from the terminal capping agent.

In the ester interchange reaction (melt polymerization method) in which a diester carbonate is used as the carbonate precursor, a predetermined amount of a diphenol is stirred together with the diester carbonate in the presence of an inert gas under heating, and the formed alcohol or phenol is distilled off. The reaction temperature which differs according to the boiling point of the formed alcohol or phenol is generally 120 to 350°C. The reaction is completed while the formed alcohol or phenol is distilled off by reducing the pressure from the initial stage. In the initial stage of the reaction, a terminal capping agent is added together with the diphenol or in the middle of the reaction. An existing known catalyst which is used for an ester interchange reaction may be used to promote the reaction. Examples of the diester carbonate used in this ester interchange reaction include diphenyl carbonate, dinaphthyl carbonate, dimethyl carbonate, diethyl carbonate and dibutyl carbonate. Out of these, diphenyl carbonate is particularly preferred.

The polyamide resin (PA) as the component A-2 is, for example, a ring-opened polymer of a cyclic lactam, a polymer of an aminocarboxylic acid or a polycondensate of a dibasic acid and a diamine, as exemplified by aliphatic polyamides such as nylon 6, nylon 66, nylon 46, nylon 610, nylon 612, nylon 11 and nylon 12, aliphatic-aromatic polyamides such as poly(metaxyleneadipamide), poly(hexamethyleneterephthalamide), poly(nonamethyleneterephthalamide), poly(hexamethyleneisophthalamide) and poly(tetramethyleneisophthalamide), and copolymers and mixtures thereof. The polyamide which can be used in the present invention is not particularly limited.

The molecular weight of the polyamide resin is not particularly limited but its relative viscosity measured in 98 % sulfuric acid at a concentration of 1% and 25°C should be 1. 7 to 4.5, preferably 2.0 to 4.0, particularly preferably 2.0 to 3.5.

The polyolefin resin as the component A-2 is, for example, a homopolymer or copolymer of an olefin such as ethylene, propylene or butene, or a copolymer of an olefin and a comonomer copolymerizable with the olefin. Examples of the polyolefin resin include polyethylene, polypropylene, ethylene-vinyl acetate copolymer, ethylene-ethyl acrylate copolymer, ethylene-acrylic acid copolymer, ethylene-methyl methacrylate copolymer, ethylene-$\alpha$-olefin copolymer, ethylene-propylene copolymer and ethylene-butene copolymer. The molecular weight of these polyolefin resins is not particularly limited but as it becomes higher, flame retardancy becomes better.

The styrene-based resin as the component A-2 is a homopolymer or copolymer of an aromatic vinyl monomer such as styrene, $\alpha$-methylstyrene or vinyl toluene, a copolymer of one of these monomers and a vinyl monomer such as acrylonitrile or methyl methacrylate, or a graft polymer obtained by graft polymerizing a diene-based rubber such as polybutadiene, ethylene-propylene-based rubber or acrylic rubber with styrene and/or styrene derivative, or styrene and/or styrene derivative with another vinyl monomer. Examples of the styrene-based resin include polystyrene, impact-resistant polystyrene (HIPS), acrylonitrile·styrene copolymer (AS resin), acrylonitrile·butadiene·styrene copolymer (ABS resin), methyl methacrylate·butadiene· styrene copolymer (MBS resin), methyl methacrylate· acrylonitrile·butadiene·styrene copolymer (MABS resin), acrylonitrile·acrylic rubber·styrene copolymer (AAS resin), acrylonitrile·ethylene propylene-based rubber·styrene copolymer (AES resin), and mixtures thereof. From the viewpoint of impact resistance, rubber modified styrene-based resins are preferred, and they are polymers containing rubber-like polymer particles dispersed in a vinyl aromatic polymer matrix and obtained by adding an aromatic vinyl monomer and optionally a vinyl monomer in the presence of a rubber-like polymer and carrying out the known bulk polymerization, bulk suspension polymerization, solution polymerization or emulsion polymerization of the resulting monomer mixture.

Examples of the rubber-like polymer include diene-based rubbers such as polybutadiene, poly(styrene-butadiene) and poly(acrylonitrile-butadiene), saturated rubbers obtained by hydrogenating the above diene rubbers, acrylic rubbers such as isoprene rubber, chloroprene rubber and butyl polyacrylate, and ethylene-propylene-diene monomer terpolymer (EPDM). Out of these, diene-based rubbers are preferred.

The aromatic vinyl monomer which is an essential component contained in the monomer mixture which is graft copolymerizable and polymerized in the presence of the above rubber-like polymer is, for example, styrene, $\alpha$-methylstyrene or paramethyl styrene, out of which styrene is most preferred.

Examples of the vinyl monomer which can be optionally added include acrylonitrile and methyl methacrylate.

The content of the rubber-like polymer in the rubber modified styrene resin is 1 to 50 wt%, preferably 2 to 40 wt%. The content of the graft polymerizable monomer mixture is 99 to 50 wt%, preferably 98 to 60 wt%.

The polyphenylene sulfide resin (PPS) as the component A-2 has a recurring unit represented by the following formula.

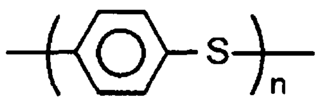

In the above formula, n is an integer of 1 or more, preferably 50 to 500, more preferably 100 to 400, and the polyphenylene sulfide resin may be either linear or crosslinked.

As an example of the method of producing the polyphenylene sulfide resin, dichlorobenzene and sodium disulfide are reacted with each other. A crosslinked polyphenylene sulfide resin can be produced by polymerizing a polymer having a low degree of polymerization, heating it in the presence of air and partially crosslinking it to increase its molecular weight, and a linear polyphenylene sulfide resin can be produced by increasing the molecular weight at the time of polymerization.

The polyether imide resin (PEI) as the component A-2 has a recurring unit represented by the following formula.

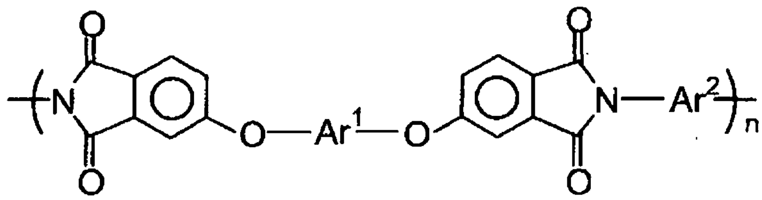

In the above formula, $Ar^1$ is an aromatic dihydroxy compound residue, and $Ar^2$ is an aromatic diamine residue. The aromatic dihydroxy compound is, for example, an aromatic dihydroxy compound which has been described for the above polycarbonate resin, particularly preferably bisphenol A. Examples of the aromatic diamine include m-phenylenediamine, p-phenylenediamine, 4,4'-diaminodiphenyl, 3,4'-diaminodiphenyl, 4,4'-diaminodiphenyl ether, 3,4'-diaminodiphenyl ether, diaminodiphenyl methane, diaminodiphenyl sulfone and diaminodiphenyl sulfide.

"n" in the above formula is an integer of 5 to 1,000, preferably 10 to 500.

Examples of the method of producing the polyether imide resin are described in US Patent No. 3,847,867, US Patent No. 3,847,869, US Patent No. 3,850,885, US Patent No. 3,852,242 and US Patent No. 3,855,178.

Out of the above-described components A-2, the polyester resin (PEst), polyphenylene ether resin (PPE), polycarbonate resin (PC), polyamide resin (PA) and styrene-based resin are preferred.

(component B: organic phosphorus compound)

In the present invention, the organic phosphorus compound (component B) is represented by the following formula (1-a).

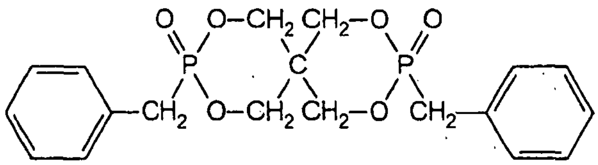

(1-a)

The organic phosphorus compound (component B) represented by the formula (1-a) has an extremely excellent flame retarding effect for the above resin. As far as the inventors of the present invention know, the halogen-free flame retardation of the resin has been difficult with a small amount of a flame retardant and has had a large number of problems to be solved for practical use.

However, according to the present invention, surprisingly, the flame retardation of the resin is easily attained by using a small amount of the above organic phosphorus compound (component B) without impairing the characteristic properties of the resin.

In the present invention, a phosphorus compound except for the component B, a fluorine-containing resin or another additive may be used as a matter of course in addition to the component B to reduce the amount of the component B and improve the flame retardancy, physical properties and chemical properties of a molded article and for other purposes. These other components will be described in detail hereinafter.

In the flame retardant resin composition of the present invention, the organic phosphorus compound (component B) is represented by the formula (1-a). Other organic phosphorus compounds are represented by the following formula (1-b), (1-c) or (1-d).

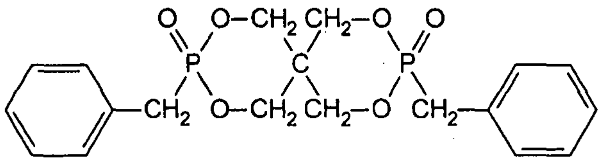

(1-a)

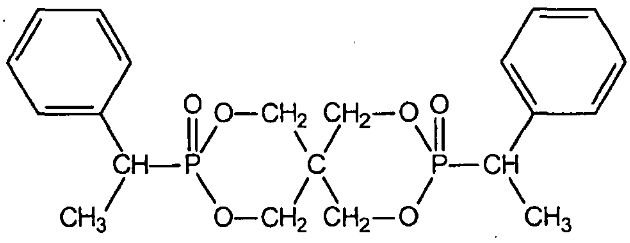

(1-b)

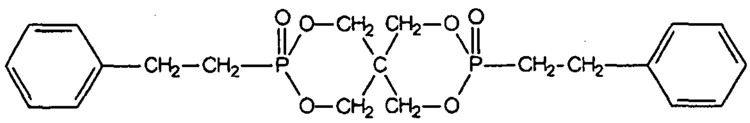

(1-c)

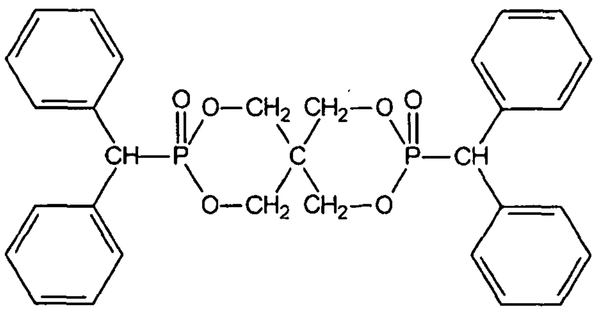

(1-d)

A description is subsequently given of the method of synthesizing the organic phosphorus compound (component B) in the present invention. The component B may be produced by a method except for the method described below.

The component B is obtained by reacting phosphorus trichloride with pentaerythritol, treating the oxidized reaction product with an alkali metal compound such as sodium methoxide and reacting an aralkyl halide with the reaction product.

The component B may also be obtained by a method in which pentaerythritol is reacted with aralkyl phosphonic acid dichloride, or a method in which pentaerythritol is reacted with phosphorus trichloride and then the obtained compound is reacted with an aralkyl alcohol to carry out Arbuzov rearrangement at a high temperature may be employed to obtain the organic phosphorus compound. The latter reaction is disclosed in US Patent No. 3, 141, 032, JP-A 54-157156 and JP-A 53-39698.

A specific method of synthesizing the component B will be described hereinbelow, and this method is just given for explanation. The component B used in the present invention may be synthesized not only by this method but also by its modified method or another method. More specific synthesizing methods will be described in Preparation Examples which are given hereinafter.

(I) organic phosphorus compound (1-a) representing component B;

This compound can be obtained by reacting pentaerythritol with phosphorus trichloride, treating the reaction product oxidized by tertiary butanol with sodium methoxide, and reacting the reaction product with benzyl bromide.

(II) organic phosphorus compound (1-b);

This compound can be obtained by reacting pentaerythritol with phosphorus trichloride, treating the reaction product oxidized by tertiary butanol with sodium methoxide and reacting the reaction product with 1-phenylethyl bromide.
(III) organic phosphorus compound (1-c);

This compound can be obtained by reacting pentaerythritol with phosphorus trichloride, treating the reaction product oxidized by tertiary butanol with sodium methoxide and reacting the reaction product with 2-phenylethyl bromide.
(IV) organic phosphorus compound (1-d);

This compound can be obtained by reacting pentaerythritol with diphenylmethyl phosphonic acid dichloride.

As an alternative method, the organic phosphorus compound is obtained by reacting pentaerythritol with phosphorus trichloride and heating a reaction product of the obtained product and diphenyl methyl alcohol in the presence of a catalyst.

The acid value of the component B is preferably not more than 0.7 mgKOH/g, more preferably not more than 0.5 mgKOH/g. By using the component B having an acid value within this range, a molded article which is excellent in flame retardancy and color and has high heat stability is obtained. The acid value of the component B is most preferably not more than 0.4 mgKOH/g. The term "acid value" means the amount of KOH required for neutralizing the acid component contained in 1 g of a sample (component B).

Further, the component B having an HPLC purity of preferably at least 90 %, more preferably at least 95 % is used. The component B having such a high HPLC purity is excellent in the flame retardancy, color and heat stability of a molded article obtained therefrom. The HPLC purity of the component B can be effectively measured by the following method.

The Develosil ODS-7 having a length of 300 mm and a diameter of 4 mm of Nomura Kagaku Co., Ltd. was used as a column, and the column temperature was set to 40°C. A mixed solution of acetonitrile and water in a weight ratio of 6:4 was used as a solvent and 5 $\mu$l of the solution was injected. UV-260 nm was used as a detector.

The method of removing impurities contained in the component B is not particularly limited but a method in which repulp cleaning (cleaning with a solvent and filtration are repeated several times) with a solvent such as water or methanol is the most effective and economically advantageous.

The content of the organic phosphorus compound (component B) is 3 to 50 parts, more preferably 4 to 40 parts by weight by weight based on 100 parts by weight of the resin component (component A).

The preferred range of the content of the component B is determined according to the desired level of flame retardancy and the type of the resin component (component A). Other components except for the components A and B constituting the composition may be optionally used as long as the object of the present invention is not impaired, and use of another flame retardant, a retarding aid or a fluorine-containing resin can change the content of the component B. In most cases, the content of the component B can be reduced by using these substances.

For the preparation of the flame retardant resin composition of the present invention, a method in which the resin component (component A), the organic phosphorus compound (component B) and optionally other components are premixed together by means of a mixer such as twin-cylinder mixer, super mixer, super floater or Henschel mixer, and the premixture is supplied into a kneading machine to be molten and mixed is preferably employed. A melt mixer such as a kneader, or single-screw or double-screw extruder may be used as the kneading machine. A method in which a double-screw extruder is used to melt the resin composition at 220 to 280 °C, preferably 230 to 270°C and a liquid

component is injected into the resin composition by a side feeder, extruded and pelletized by a pelletizer is particularly preferably employed.

<molded article>

The flame retardant resin composition of the present invention contains substantially no halogen and has extremely high flame retardancy. The flame retardant resin composition of the present invention can achieve at least UL-94 V-2 flammability.

The present invention includes a molded article formed from the flame retardant resin composition of the present invention. The flame retardant resin composition of the present invention is useful as a material for molding various molded articles such as home electric appliance parts, electric and electronic parts, auto parts, mechanical and electromechanical parts, and cosmetic containers. More specifically, it can be advantageously used in breaker parts, switch parts, motor parts, ignition coil cases, power plugs, power receptacles, coil bobbins, connectors, relay cases, fuse cases, flyback transformer parts, focus block parts, distributor caps and harness connectors. Further, it is useful as a material for molding housings, casing and chassis which are becoming thinner, for example, for electric and electronic products (for example, home electric appliances and OA equipment and parts thereof, such as telephones, personal computers, printers, facsimiles, copiers, TV, video decks and audio equipment). It is particularly useful as a material for molding mechanical and electromechanical parts for home electric appliances and OA equipment, such as printer housings, fixing unit parts and facsimiles which require excellent heat resistance and flame retardancy.

The molding technique is not particularly limited and may be injection molding, blow molding or press molding. However, preferably, a pellet resin composition is injection molded by using an injection molding machine.

Examples

The following examples are provided for the purpose of further illustrating the present invention but are in no way to be taken as limiting. Evaluations were made by the following methods.

(1) Flame retardancy (UL-94 rating)

Flame retardancy was rated in accordance with a vertical burn test specified in US UL-94 standards as a measure of evaluating flame retardancy by using a test piece having a thickness of 1/16 inch (1.6 mm). When burning stops within 30 seconds after a flame is removed, the specimen is rated V-2. A specimen rated below this is designated as "notV".

(2) Acid value

This was measured in accordance with JIS-K-3504.

(3) MFR

This was measured in accordance with JIS-K-7210 (ISO1133).

(Preparation Example 1)

preparation of 2,4,8,10-tetraoxa-3,9-diphosphaspiro[5.5]undecane, 3,9-dibenzyl-3,9-dioxide (FR-1)

816.9 g (6.0 moles) of pentaerythritol, 19.0 g (0.24 mole) of pyridine and 2,250.4 g (24.4 moles) of toluene were charged into a reactor equipped with a thermometer, condenser and dropping funnel and stirred. 1,651.8 g (12.0 moles) of phosphorus trichloride was added to the reactor by using the dropping funnel and then heated and stirred at 60°C after addition. After a reaction, the reactor was cooled to room temperature, 26.50 parts of methylene chloride was added to the obtained reaction product, and 889.4 g (12.0 moles) of tertiary butanol and 150.2 g (1.77 moles) of methylene chloride were added dropwise under cooling with ice. The obtained crystal was cleaned with toluene and methylene chloride and filtered. The obtained filtrate was dried at 80°C and 1.33 x $10^2$ Pa for 12 hours to obtain 1,341.1 g (5.88 moles) of a white solid. It was confirmed by $^{31}P$ and $^1H$NMR spectra that the obtained solid was 2,4,8,10-tetraoxa-3,9-diphosphaspiro[5.5]undecane, 3,9-dihydro-3,9-dioxide.

1,341.0 g (5.88 moles) of the obtained 2,4,8,10-tetraoxa-3,9-diphosphaspiro[5.5]undecane, 3,9-dihydro-3,9-dioxide and 6,534.2 g (89.39 moles) of DMF were charged into a reactor equipped with a thermometer, condenser and dropping funnel and stirred. 648.7 g (12.01 moles) of sodium methoxide was added to the reactor under cooling with

ice. After 2 hours of stirring under cooling with ice, they were stirred at room temperature for 5 hours. Further, after DMF was distilled off, 2,613.7 g (35. 76 moles) of DMF was added, and 2,037.79 g (11.91 moles) of benzyl bromide was added dropwise to the reaction mixture under cooling with ice. After 3 hours of stirring under cooling with ice, DMF was distilled off, 8 liters of water was added, and the precipitated solid was separated by filtration and cleaned with 2 liters of water twice. The obtained roughly purified product and 4 liters of methanol were put into a reactor equipped with a condenser and stirrer and refluxed for about 2 hours. After the reactor was cooled to room temperature, the crystal was separated by filtration and cleaned with 2 liters of methanol, and the obtained filtrate was dried at 120°C and 1.33 x $10^2$ Pa for 19 hours to obtain 1,863.5 g (4.56 moles) of a white flaky crystal. It was confirmed by $^{31}$P and $^{1}$HNMR spectra and elemental analysis that the obtained crystal was 2,4,8,10-tetraoxa-3,9-diphosphaspiro[5.5]undecane, 3,9-dibenzyl-3,9-dioxide. The yield rate was 76 %, and the $^{31}$ PNMRpuritywas99%. The HPLC purity measured by the method of this text was 99 %. The acid value was 0.06 mgKOH/g. $^{1}$H-NMR(DMSO-$d_6$, 300 MHz): δ7.2 - 7.4 (m, 10H), 4.1- 4.5 (m, 8H), 3.5 (d, 4H), $^{31}$P-NMR (DMSO-$d_6$, 120 MHz): δ23.1 (S), melting point: 255 - 256°C, elemental analysis calculated values: C, 55.89; H, 5.43, measurement values: C, 56.24; H, 5.35

(Preparation Example 2)

preparation of ,2,4,8,10-tetraoxa-3,9-diphosphaspiro[5.5]undecane, 3,9-dibenzyl-3,9-dioxide (FR-2)

22.55 g (0.055 mole) of 3,9-dibenzyloxy-2,4,8,10-tetraoxa-3,9-diphosphaspiro[5.5 ]undecane, 19.01 g (0.11 mole) of benzyl bromide and 33.54 g (0.32 mole) of xylene were charged into a reactor equipped with a stirrer, thermometer and condenser, and dry nitrogen was let flow into the reactor under agitation at room temperature. Then, heating was started with an oil bath, and the reaction product was heated and stirred at a reflux temperature (about 130°C) for 4 hours. After heating, the reaction product was left to be cooled to room temperature, and 20 ml of xylene was added and further stirred for 30 minutes. The precipitated crystal was separated by filtration and cleaned with 20 ml of xylene twice. The obtained roughly purified product and 40 ml of methanol were put into a reactor equipped with a condenser and stirrer and refluxed for about 2 hours. After cooling to room temperature, the crystal was separated by filtration and cleaned with 20 ml of methanol, and the obtained filtrate was dried at 120°C and 1.33 x $10^2$ Pa for 19 hours to obtain a white flaky crystal. It was confirmed by the mass spectral analysis, $^{1}$H and $^{31}$P nuclear magnetic resonance spectral analysis and elemental analysis that the product was bisbenzylpentaerythritol diphosphonate. The yield was 20.60 g, the yield rate was 91 %, and the $^{31}$PNMR purity was 99 %. The HPLC purity measured by the method of this text was 99 %. The acid value was 0.05.mgKOH/g. $^{1}$H-NMR(DMSO-$d_6$, 300 MHz): δ7.2 - 7.4 (m, 10H), 4.1- 4.5 (m, 8H), 3.5 (d, 4H), $^{31}$P-NMR (DMSO-$d_6$, 120 MHz): δ23.1 (S), melting point: 257°C

(Preparation Example 3) (for comparison and/or reference only) preparation of 2,4,8,10-tetraoxa-3,9-diphosphaspiro[5.5] undecane, 3,9-diα-methylbenzyl-3,9-dioxide (FR-3)

816.9 g (6.0 moles) of pentaerythritol, 19.0 g (0.24 mole) of pyridine and 2,250.4 g (24.4 moles) of toluene were charged into a reactor equipped with a thermometer, condenser and dropping funnel and stirred. 1,651.8 g (12.0 moles) of phosphorus trichloride was added to the reactor by using the dropping funnel and then heated and stirred at 60°C after addition. After a reaction, the reactor was cooled to room temperature, 5,180.7 g (61.0 moles) of methylene chloride was added to the obtained reaction product, and 889.4 g (12.0 moles) of tertiary butanol and 150.2 g (1.77 moles) of methylene chloride were added dropwise under cooling with ice. The obtained crystal was cleaned with toluene and methylene chloride and filtered. The obtained filtrate was dried at 80 °C and 1.33 x $10^2$ Pa for 12 hours to obtain 1,341.1 g (5.88 moles) of a white solid. It was confirmed by $^{31}$P and $^{1}$HNMR spectra that the obtained solid was 2,4,8,10-tetraoxa-3,9-diphosphaspiro[5.5]undecane, 3,9-dihydro-3,9-dioxide.

1,341.0 g (5.88 moles) of the obtained 2,4,8,10-tetraoxa-3,9-diphosphaspiro[5.5]undecane, 3,9-dihydro-3,9-dioxide and 6,534.2 g (89.39 moles) of DMF were charged into a reactor equipped with a thermometer, condenser and dropping funnel and stirred. 648.7 g (12.01 moles) of sodium methoxide was added to the reactor under cooling with ice. After 2 hours of stirring under cooling with ice, they were stirred at room temperature for 5 hours. Further, after DMF was distilled off, 2, 613. 7 g (35. 76 moles) of DMF was added, and 2,204.06 g (11.91 moles) of 1-phenylethyl bromide was added dropwise to the reaction mixture under cooling with ice. After 3 hours of stirring under cooling with ice, DMF was distilled off, 8 liters of water was added, and the precipitated solid was separated by filtration and cleaned with 2 liters of water twice. The obtained roughly purified product and 4 liters of methanol were put into a reactor equipped with a condenser and stirrer and refluxed for about 2 hours. After the reactor was cooled to room temperature, the crystal was separated by filtration and cleaned with 2 liters of methanol, and the obtained filtrate was dried at 120°C and 1.33 x $10^2$ Pa for 19 hours to obtain 1,845.9 g (4.23 moles) of a white flaky crystal. It was confirmed by $^{31}$PNMR and $^{1}$HNMR spectra and elemental analysis that the obtained solid was 2,4,8,10-tetraoxa-3,9-diphosphaspiro[5.5]undecane, 3,9-diα-methylbenzyl-3,9-dioxide. The $^{31}$PNMR purity was 99 %. The HPLC purity measured by the method of this text was 99

%. The acid value was 0.03 mgKOH/g. $^{1}$H-NMR ($CDCl_3$, 300 MHz) : δ7.2 - 7.4 (m, 10H), 4.0- 4.2 (m, 4H), 3.4 - 3.8 (m, 4H), 3.3 (qd, 4H), 1.6 (ddd, 6H), $^{31}$P-NMR ($CDCl_3$, 120 MHz): δ28.7 (S), melting point: 190 - 210°C, elemental analysis calculated values: C, 57.80; H, 6.01, measurement values: C, 57.83; H, 5.96

(Preparation Example 4) (for comparison and/or reference only) preparation of 2,4,8,10-tetraoxa-3,9-diphosphaspiro[5.5]undecane, 3,9-di(2-phenylethyl)-3,9-dioxide (FR-4)

816.9 g (6.0 moles) of pentaerythritol, 19.0 g (0.24 mole) of pyridine and 2,250.4 g (24.4 moles) of toluene were charged into a reactor equipped with a thermometer, condenser and dropping funnel and stirred. 1,651.8 g (12.0 moles) of phosphorus trichloride was added to the reactor by using the dropping funnel and then heated and stirred at 60°C after addition. After a reaction, the reactor was cooled to room temperature, 5,180.7 g (61.0 moles) of methylene chloride was added to the obtained reaction product, and 889.4 g (12.0 moles) of tertiary butanol and 150.2 g (1.77 moles) of methylene chloride were added dropwise under cooling with ice. The obtained crystal was cleaned with toluene and methylene chloride and filtered. The obtained filtrate was dried at 80°C and 1.33 x $10^2$ Pa for 12 hours to obtain 1,341.1 g (5.88 moles) of a white solid. It was confirmed by $^{31}$P and $^{1}$HNMR spectra that the obtained solid was 2,4,8,10-tetraoxa-3,9-diphosphaspiro[5.5]undecane, 3,9-dihydro-3,9-dioxide.

1,341.0 g (5.88 moles) of the obtained 2,4,8,10-tetraoxa-3,9-diphosphaspiro[5.5]undecane, 3,9-dihydro-3,9-dioxide and 6,534.2 g (89.39 moles) of DMF were charged into a reactor equipped with a thermometer, condenser and dropping funnel and stirred. 648.7 g (12.01 moles) of sodium methoxide was added to the reactor under cooling with ice. After 2 hours of stirring under cooling with ice, they were stirred at room temperature for 5 hours. After DMF was distilled off, 2,613.7 g (35.76 moles) of DMF was added, and 2,183.8 g (11.8 moles) of (2-bromoethyl)benzene was added dropwise to the reaction mixture under cooling with ice. After 3 hours of stirring under cooling with ice, DMF was distilled off, 8 liters of water was added, and the precipitated solid was separated by filtration and cleaned with 2 liters of water twice. The obtained roughly purified product and 4 liters of methanol were put into a reactor equipped with a condenser and stirrer and refluxed for about 2 hours. After the reactor was cooled to room temperature, the crystal was separated by filtration and cleaned with 2 liters of methanol, and the obtained filtrate was dried at 120°C and 1.33 x $10^2$ Pa for 19 hours to obtain 1,924.4 g (4.41 moles) of a white powder. It was confirmed by $^{31}$PNMR and $^{1}$HNMR spectra and elemental analysis that the obtained solid was 2,4,8,10-tetraoxa-3,9-diphosphaspiro[5.5]undecane, 3,9-di(2-phenylethyl)-3,9-dioxide. The $^{31}$PNMR purity was 99 %. The HPLC purity measured by the method of this text was 99 %. The acid value was 0.03 mgKOH/g. $^{1}$H-NMR($CDCl_3$, 300 MHz): δ7. 1 - 7.4 (m, 10H), 3.85 - 4.65 (m, 8H), 2. 90 - 3.05 (m, 4H), 2.1 - 2.3 (m, 4H), $^{31}$P-NMR ($CDCl_3$, 120 MHz): δ31.5 (S), melting point: 245 - 246°C, elemental analysis calculated values: C, 57.80; H, 6.01, measurement values: C, 58.00; H, 6.07

Preparation Example 5) (for comparison and/or reference only) preparation of 2,4,8,10-tetraoxa-3,9-diphosphaspiro[5.5]undecane, 3,9-di(2-phenylethyl)-3,9-dioxide (FR-5)

436.4 g (1.0 mole) of 3,9-di(2-phenylethoxy)-2,4,8,10-tetraoxa-3,9-diphosphasp iro[5.5]undecane and 370.1 g (2.0 moles) of 2-phenylethyl bromide were charged into a reactor equipped with a stirrer, thermometer and condenser, and dry nitrogen was let flow into the reactor under agitation at room temperature. Then, heating was started with an oil bath, and the reactor was kept at an oil bath temperature of 180°C for 10 hours. After the oil bath was removed, the reactor was cooled to room temperature. 2,000 ml of methanol was added to the obtained white solid reaction product, further stirred and cleaned and then, a white powder was separated by filtration with a glass filter. The obtained white powder and 4,000 ml of methanol were put into a reactor equipped with a condenser and stirrer and refluxed for about 2 hours. After cooling to room temperature, the crystal was separated by filtration and cleaned with 2,000 ml of methanol. The obtained white powder was dried at 100 Pa and 120°C for 8 hours to obtain 362.3 g of 2,4,8,10-tetraoxa-3,9-diphosphaspiro[5.5]undecane, 3,9-di(2-phenylethyl)-3,9-dioxide. It was confirmed by the mass spectral analysis, $^{1}$H and $^{31}$P nuclear magnetic resonance spectral analysis and elemental analysis that the product was 2,4,8,10-tetraoxa-3,9-diphosphaspiro[5.5]undecane, 3, 9-di (2-phenylethyl)-3,9-dioxide. The yield rate was 83%, the HPLC purity was 99.3 %, and the acid value was 0.41 mgKOH/g.
$^{1}$H-NMR($CDCl_3$, 300 MHz) : δ7.1 - 7.4 (m, 10H), 3.85 - 4. 65 (m, 8H), 2.90 - 3.05 (m, 4H), 2.1 - 2.3 (m, 4H), $^{31}$P-NMR ($CDCl_3$, 120 MHz): δ31.5 (S), melting point: 245 - 246°C

(Preparation Example 6) (for comparison and/or reference only)

preparation of 2,4,8,10-tetraoxa-3,9-diphosphaspiro[5.5]undecane, 3,9-bis(diphenylmethyl)-3,9-dioxide (FR-6)

2,058.5 g (7.22 moles) of diphenylmethyl phosphonic acid dichloride, 468.3 g (3.44 moles) of pentaerythritol, 1,169.4 g (14.8 moles) of pyridine and 8, 200 g of chloroform were charged into a 10-liter 3-necked flask equipped with

a stirrer, agitation blade, reflux cooling tube and thermometer, heated at 60°C in a nitrogen gas stream and stirred for 6 hours. After the end of a reaction, chloroform was substituted by methylene chloride, and 6 liters of distilled water was added to the reaction mixture and stirred to precipitate a white powder. The white powder was separated by suction filtration, and the obtained white product was cleaned with methanol and dried at 100°C and 1. 33 x $10^2$ Pa for 10 hours to obtain 1,156.2 g of a white solid. It was confirmed by $^{31}$P-NMR and $^1$H-NMR spectra and elemental analysis that the obtained product was 2,4,8,10-tetraoxa-3,9-diphosphaspiro[5.5]undecane, 3,9-bis(diphenylmethyl)-3,9-dioxide. The $^{31}$P-NMR purity was 99 %. The HPLC purity measured by the method of this text was 99 %. The acid value was 0.3 mgKOH/g. $^1$H-NMR(DMSO-$d_6$, 300 MHz) : δ7.20 - 7.60 (m, 20H), 5.25 (d, 2H), 4.15 - 4.55 (m, 8H), $^{31}$P-NMR (DMSO-$d_6$, 120 MHz) : δ20 9, melting point: 265°C, elemental analysis calculated values: C, 66.43; H, 5.39, measurement values: c, 66.14; H, 5.41

(Preparation Example 7) (for comparison and/or reference only) preparation of 2,4,8,10-tetraoxa-3,9-diphosphaspiro[5.5] undecane, 3,9-bis(diphenylmethyl)-3,9-dioxide (FR-7)

40.4 g (0.072 mole) of 3,9-bis(diphenylmethoxy)-2,4,8,10-tetraoxa-3,9-diphospha spiro[5.5]undecane, 35.5 g (0.14 mole) of diphenylmethyl bromide and 48.0 g (0.45 mole) of xylene were charged into a 3-necked flask equipped with a stirrer, thermometer and condenser in a nitrogen gas stream, heated and stirred at a reflux temperature (about 130°C) for 3 hours. After the end of heating, the flask was left to be cooled to room temperature, 30 ml of xylene was added and further stirred for 30 minutes. The precipitated crystal was separated by filtration and cleaned with 30 ml of xylene twice. The obtained roughly purified product and 100 ml of methanol were put into an eggplant-like flask, and a condenser was attached to the flask to carry out reflux for about 1 hour. After cooling to room temperature, the crystal was separated by filtration, cleaned with 50 ml of methanol twice and dried under reduced pressure at 120°C. It was confirmed by $^{31}$P-NMR and $^1$H-NMR spectra and elemental analysis that the obtained solid was 2,4,8,10-tetraoxa-3,9-diphosphaspiro[5.5]undecane, 3,9-bis(diphenylmethyl)-3,9-dioxide. The obtained solid was a white powder, the yield was 36.8 g, and the yield rate was 91 %. The $^{31}$P-NMR purity was 99 %. The HPLC purity measured by the method of this text was 99%. The acid value was 0.07 mgKOH/g.
$^1$H-NMR(DMSO-$d_6$, 300 MHz): δ7.2 - 7.6 (m, 20H), 6.23 (d, J = 9 Hz, 2H), 3.89 - 4.36 (m, 6H), 3.38 - 3.46 (m, 2H), $^{31}$P-NMR ($CDCl_3$, 120 MHz) : δ20.9 (S), melting point: 265°C, elemental analysis calculated values: C, 66.43; H, 5.39, measurement values: C, 66.14; H, 5.41

(Preparation Example 8)

preparation of polylactic acid (PLA-2)

100 parts by weight of L-lactide was charged into a polymerization tank, the inside of the polymerization tank was substituted by nitrogen, and 0.1 part by weight of stearyl alcohol and 0.05 part by weight of tin octylate as a catalyst were added to carry out polymerization at 190°C for 2 hours. Thereafter, the pressure was reduced to remove the residual lactide, and the obtained product was chipped to obtain poly(L-lactic acid) resin. The obtainedpoly(L-lactic acid) resin had a weight average molecular weight (Mw) of 14.3 x $10^4$, a crystallization point (Tc) of 122°C and a melting point (Tm) of 165°C.
100 parts by weight of D-lactide was charged into a polymerization tank, the inside of the polymerization tank was substituted by nitrogen, 0.1 part by weight of stearyl alcohol and 0.05 part by weight of tin octylate as a catalyst were added to carry out polymerization at 190°C for 2 hours. Thereafter, the pressure was reduced to remove the residual lactide, and the obtained product was chipped to obtain poly (D-lactic acid) resin. The obtained poly (D-lactic acid) resin had a weight average molecular weight (Mw) of 16.0 x $10^4$, a crystallization point (Tc) of 126°C and a melting point (Tm) of 169°C.
50 parts by weight of the obtained poly(L-lactic acid) resin, 50 parts by weight of the poly(D-lactic acid) resin, 0.1 part by weight of 2,2'-methylenebis(4,6-di-tert-butylphenyl)sodium phosphate (Adecastab NA-11; ADEKA Co., Ltd.) and 1.0 part by weight of talc (P-3: Nippon Talc Co., Ltd.) were supplied into a double-screw extruder having a 30 mm-diameter vent (TEX30XSST of The Japan Steel Works, Ltd.) to be melt extruded into a pellet at a cylinder temperature of 270°C, a screw revolution of 250 rpm, a delivery rate of 9 kg/h and a vent pressure of 3 kPa to obtain polylactic acid (PLA-2).
Components used in Examples and Comparative Examples are given below.

(I) polylactic acid resin (component A)

(i) polylactic acid (LACEA H100 of Mitsui Chemical Co., Ltd.) was used (to be referred to as "PLA-1" hereinafter). The MFR value measured at 190°C under a load of 2.16 kg was 13.5 g/10 min.

(ii) stereocomplex polylactic acid resin produced in Preparation Example 8 (to be referred to as "PLA-2" hereinafter)

(II) organic phosphorus compound (component B)

(i) 2,4,8,10-tetraoxa-3,9-diphosphaspiro[5.5]undecane,3,9-di benzyl-3,9-dioxide synthesized in Preparation Example 1 {phosphorus-based compound represented by the formula (1-a) (to be referred to as "FR-1" hereinafter)}
(ii) 2,4,8,10-tetraoxa-3,9-diphosphaspiro[5.5]undecane,3,9-di benzyl-3,9-dioxide synthesized in Preparation Example 2 {phosphorus-based compound represented by the formula (1-a) (to be referred to as "FR-2" hereinafter)}
(iii) 2,4,8,10-tetraoxa-3,9-diphosphaspiro[5.5]undecane,3,9-di $\alpha$-methylbenzyl-3,9-dioxide synthesized in Preparation Example 3 {phosphorus-based compound represented by the formula (1-b) (to be referred to as "FR-3" hereinafter)}
(iv) 2,4,8,10-tetraoxa-3,9-diphosphaspiro[5.5]undecane,3,9-di (2-phenylethyl)-3,9-dioxide synthesized in Preparation Example 4 {phosphorus-based compound represented by the formula (1-c) (to be referred to as "FR-4" hereinafter)}
(v) 2,4,8,10-tetraoxa-3,9-diphosphaspiro[5.5]undecane,3,9-di (2-phenylethyl)-3,9-dioxide synthesized in Preparation Example 5 {phosphorus-based compound represented by the formula (1-c) (to be referred to as "FR-5" hereinafter)}
(vi) 2,4,8,10-tetraoxa-3,9-diphosphaspiro[5.5]undecane,3,9-bi s(diphenylmethyl)-3,9-dioxide synthesized in Preparation Example 6 {phosphorus-based compound represented by the formula (1-d) (to be referred to as "FR-6" hereinafter)}
(vii) 2,4,8,10-tetraoxa-3,9-diphosphaspiro[5.5]undecane,3,9-bi s(diphenylmethyl)-3,9-dioxide synthesized in Preparation Example 7 {phosphorus-based compound represented by the formula (1-d) (to be referred to as "FR-7" hereinafter)}

(III) other organic phosphorus compounds

(i) triphenyl phosphate (TPP of Daihachi Chemical Industry Co., Ltd.) (to be referred to as "TPP" hereinafter)
(ii) 1,3-phenylenebis[di(2,6-dimethylphenyl)phosphate] (PX-200 of Daihachi Chemical Industry Co., Ltd.) (to be referred to as "PX-200" hereinafter)

Examples 1 to 16 and Comparative Examples 1 to 8

The amounts (parts by weight) shown in Tables 1 and 2 of components shown in Tables 1 and 2 were mixed together by means of a tumbler, and the resulting mixture was pelletized by a 15 mm-diameter double-screw extruder (KZW15 of Technobell Co. , Lid.) The obtained pellet was dried with a hot air drier at 130°C for 4 hours. The dried pellet was molded by an injection molding machine (J75EIII of The Japan Steel Works, Ltd.). The evaluation results of the molded plate are shown in Tables 1 and 2.

Table 1

| Composition | | Unit | Ex. 1 | Ex. 2 | Ex. 3 | Ex. 4 | Ex. 5* | Ex. 6* | Ex. 7* | Ex. 8* | Ex. 9* |
|---|---|---|---|---|---|---|---|---|---|---|---|
| Component | Component A | Type | PLA-1 | PLA-1 | PLA-1 | PLA-1 | PLA-1 | PLA-1 | PLA-1 | PLA-1 | PLA-1 |
| | | Parts by weight | 100 | 100 | 100 | 100 | 100 | 100 | 100 | 100 | 100 |
| | Component B | Type | FR-1 | FR-1 | FR-1 | FR-2 | FR-3 | FR-4 | FR-5 | FR-6 | FR-7 |
| | | Parts by weight | 5 | 10 | 30 | 5 | 5 | 5 | 5 | 5 | 5 |
| Flame retardancy | UL-94 test | Thickness of test sample | 1.6mm | 1.6mm | 1.6mm | 1.6mm | 1.6mm | 1.6mm | 1.6mm | 1.6mm | 1.6mm |
| | | UL rating | V-2 | V-2 | V-0 | V-2 | V-2 | V-2 | V-2 | V-2 | V-2 |

Table 1 (continued)

| Composition | | Unit | Ex. 10 | Ex. 11 | Ex. 12* | Ex. 13* | Ex. 14* | Ex. 15* | Ex. 16* |
|---|---|---|---|---|---|---|---|---|---|
| Component | Component A | Type | PLA-2 | PLA-2 | PLA-2 | PLA-2 | PLA-2 | PLA-2 | PLA-2 |
| | | Parts by weight | 100 | 100 | 100 | 100 | 100 | 100 | 100 |
| | Component B | Type | FR-1 | FR-2 | FR-3 | FR-4 | FR-5 | FR-6 | FR-7 |
| | | Parts by weight | 5 | 5 | 5 | 5 | 5 | 5 | 5 |
| Flame retardancy | UL-94 test | Thickness of test sample | 1.6mm | 1.6mm | 1.6mm | 1.6mm | 1.6mm | 1.6mm | 1.6mm |
| | | UL rating | V-2 | V-2 | V-2 | V-2 | V-2 | V-2 | V-2 |

Ex.: Example; *: for comparison and/or reference only

Table 2

| Composition | | Unit | C.Ex. 1 | C.Ex. 2 | C.Ex. 3 | C.Ex. 4 | C.Ex. 5 | C.Ex. 6 | C.Ex. 7 | C.Ex. 8 |
|---|---|---|---|---|---|---|---|---|---|---|
| Component | Component A | Type | PLA-1 | PLA-2 | PLA-1 | PLA-1 | PLA-1 | PLA-1 | PLA-2 | PLA-2 |
| | | Parts by weight | 100 | 100 | 100 | 100 | 100 | 100 | 100 | 100 |
| | Phosphorus component | Type | - | - | TPP | TPP | PX-200 | PX-200 | TPP | PX-200 |
| | | Parts by weight | - | - | 5 | 30 | 5 | 30 | 5 | 5 |
| Flame retardancy | UL-94 test | Thickness of test sample | 1.6mm | 1.6mm | 1.6mm | 1.6mm | 1.6mm | 1.6mm | 1.6mm | 1.6mm |
| | | UL rating | not V | not V | not V | V-2 | not V | V-2 | not V | not V |

C.Ex.: Comparative Example

Effect of the Invention

The flame retardant resin composition of the present invention and a molded article formed therefrom have the following advantages over a conventional resin composition obtained from a plant-derived raw material.

(i) A resin composition obtained from a plant-derived raw material which has high flame retardancy is obtained without using a halogen-containing flame retardant substantially.
(ii) Since an organic phosphorus compound as a flame retardant has an excellent flame retarding effect for a resin obtained from a plant-derived raw material, V-2 rating, preferably V-0 rating is achieved even with a small amount of the organic phosphorus compound.
(iii) The thermal deterioration of a resin obtained from a plant-derived raw material rarely occurs when the resin is molded or a molded article thereof is used due to the structure and characteristic properties of the organic phosphorus compound used as a flame retardant, thereby making it possible to obtain a resin composition having excellent heat stability. Therefore, a composition having excellent flame retardancy, mechanical strength and heat stability all of which are well balanced is obtained.
(iv) Since the organic phosphorus compound as a flame retardant is achromatic and has compatibility with a resin obtained from a plant-derived raw material, a molded article having excellent transparency can be obtained.

## Claims

1. A flame retardant resin composition comprising:

(A) 100 parts by weight of a resin component (component A) which contains at least 50 wt% of a polylactic acid resin (component A-1); and
(B) 3 to 50 parts by weight of an organic phosphorus compound (component B) represented by the following formula (1-a).

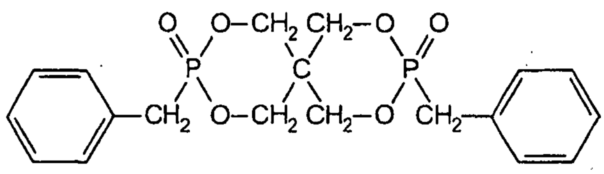

(1-a)

2. The flame retardant resin composition according to claim 1, wherein the polylactic acid resin (component A-1) has a biogenic matter content measured in accordance with ASTM D686605 of not less than 25%.

3. The flame retardant resin composition according to claim 1, wherein the acid value of the organic phosphorus compound (component B) is not more than 0.7 mgKOH/g.

4. The flame retardant resin composition according to claim 1 which can achieve at least UL-94 V-2 flammability.

5. The flame retardant resin composition according to claim 1, wherein the content of the component B is 4 to 40 parts by weight based on 100 parts by weight of the component A.

6. A molded article formed from the flame retardant resin composition of claim 1.

## Patentansprüche

1. Flammenhemmende Harzzusammensetzung, umfassend:

(A) 100 Gewichtsteile einer Harzkomponente (Komponente A), welche mindestens 50 Gew.-% eines Polymilchsäureharzes (Komponente A-1) enthält; und
(B) 3 bis 50 Gewichtsteile einer organischen Phosphorverbindung (Komponente B) der folgenden Formel (1-a).

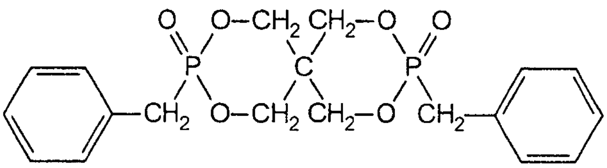

(1-a)

2. Flammenhemmende Harzzusammensetzung nach Anspruch 1, wobei das Polymilchsäureharz (Komponente A-1) einen Gehalt an biogener Materie, gemessen gemäß ASTM D686605, von nicht weniger als 25% aufweist.

3. Flammenhemmende Harzzusammensetzung nach Anspruch 1, wobei der Säurewert der organischen Phosphorverbindung (Komponente B) nicht mehr als 0,7 mgKOH/g beträgt.

4. Flammenhemmende Harzzusammensetzung nach Anspruch 1, die eine Entflammbarkeit von mindestens UL-94 V-2 erreichen kann.

5. Flammenhemmende Harzzusammensetzung nach Anspruch 1, wobei der Gehalt der Komponente B 4 bis 40 Gewichtsteile bezogen auf 100 Gewichtsteile der Komponente A beträgt.

6. Geformter Gegenstand, der aus der flammenhemmenden Harzzusammensetzung nach Anspruch 1 geformt ist.

## Revendications

1. Composition de résine ignifuge, comprenant

(A) 100 parties en poids d'un composant de résine (composant A) qui contient au moins 50% en poids d'une résine d'acide polyactique (composant A-1) et
(B) 3 à 50 parties en poids d'un composé organique de phosphore (composé B) représenté par la formule suivante (1-a) :

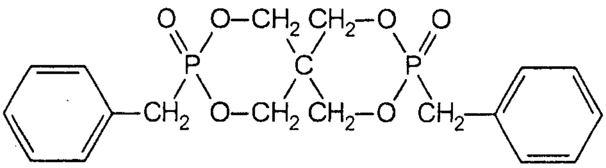

(1-a)

2. Composition de résine ignifuge selon la revendication 1, dans laquelle la résine d'acide polyactique (composant A-1) a une teneur en matière biogène, mesurée selon la norme ASTM D686605, d'au moins 25%.

3. Composition de résine ignifuge selon la revendication 1, dans laquelle l'indice d'acide du composé organique de phosphore (composant B) n'est pas supérieur à 0,7 mg KOH/g.

4. Composition de résine ignifuge selon la revendication 1 qui peut atteindre au moins une inflammabilité UL-94 V-2.

5. Composition de résine ignifuge selon la revendication 1, dans laquelle la teneur en composant B est de 4 à 40 parties en poids pour 100 parties en poids du composant A.

6. Article moulé formé à partir de la composition de résine ignifuge selon la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001164014 A
- JP 2004277552 A
- JP 2005023260 A
- JP 2005139441 A
- JP 2007246730 A
- JP 2008019294 A
- JP 2004131580 A
- EP 1586576 A1
- JP 2004018585 A
- WO 2007040243 A
- US 5310865 A
- US 2758987 A
- US 4057537 A
- US 5428126 A
- EP 0712880 A2
- US 3306874 A
- US 3847867 A
- US 3847869 A
- US 3850885 A
- US 3852242 A
- US 3855178 A
- US 3141032 A
- JP 54157156 A
- JP 53039698 A